# EUROPEAN PATENT APPLICATION

(11) **EP 2 023 235 A2**
(43) Date of publication of application: **11.02.2009**
(21) Application number: 08251984.4
(22) Date of filing: 06.06.2008
(51) Int. Cl.: G06F 3/033

(54) **A computer mouse**

(30) Priority: 31.07.2007 US 831503
(71) Applicant: City University of Hong Kong, Kowloon, Hong Kong (CN)
(72) Inventor: Yung, Kai-Ning Edward, New Territories, Hong Kong (CN); Cheng, Lee Ming, Kowloon, Hong Kong (CN); Shum, Kam Man, Kowloon, Hong Kong (CN); Fung, Yin, Kowloon, Hong Kong (CN)
(74) Representative: Martin, David John

(57) **Abstract**

A pad-free radio-frequency mouse includes an ergonomic design such that the mouse is contoured to a user's hand, a Radio-Frequency mouse transmitter, and a USB Radio-Frequency receiver. With the usual mouse pad removed, the cursor on a monitor can be subtly maneuvered by moving one's thumb or fingers over an optical sensor in the mouse. Practically all functions found in existing mice and new functions can be implemented via five or more buttons provided adjacent the optical sensor.

## Description

### BACKGROUND OF THE INVENTION

### Field of the Invention

The invention relates to a computer mouse and in particular to a mouse for personal computers and gaming devices. More particularly, the present invention relates to an ergomically designed wireless mouse that incorporates the somatology of a human being, the requirements of a physiotherapist, and the ergonomic conditions of an ordinary computer set-up throughout its design and testing stages.

### Background Information

A conventional mouse is operated by a user moving the mouse over a surface, which surface may be either a mouse-pad or simply the surface of a desk. The mouse is also provided with two or more buttons and a scroll wheel enabling a user to execute certain functions. A conventional mouse may either be connected to the computer by a wire or by a wireless connection. While such conventional designs work very well, it is known that people who work with computers for extended periods of time may suffer from a number of physical ailments such as a severe sore arm, aching wrist, and backache from using mouse-on-desk for an extended period.

### SUMMARY OF THE INVENTION

According to the present invention there is provided a computer mouse comprising: an optical sensor for detecting finger movement, a plurality of control buttons provided adjacent said optical sensor, means for converting finger movement and operation of said control buttons into an output signal, and means for transmitting said output signal wirelessly to a computer.

Preferably the converting means comprises an analogue to digital converter for finger movement conversion, an input controller receiving input switch signals from buttons, and a protocol generator concatenating the finger position data and the input switch signals. The analogue to digital converter converts finger movement into a logical computer recognized form to be received by the computer via a wireless link. The input controller may organize the input switch signals into groups to be packed by the protocol generator. Preferably the protocol generator forms the output signal from the finger position data and the input switch signals through a time division function multiplexing process or a time division bit overlaying process. Preferably the output signal is provided with identity data to be recognized by a receiver to authenticate the data and to provide pre-set uni-cast or multi-cast communication functions.

In preferred embodiments of the invention the transmitting means comprises a radio frequency transmission module.

Preferably the mouse may further comprise a laser pointer, and/or a low-power warning light. The mouse may have an energy saving sleep mode, which for example may be activated when no buttons have been operated for a prescribed period of time.

Preferably the mouse is provided with a compartment for storing a wireless receiver when not in use.

According to another aspect of the present invention there is provided a wireless mouse and receiver combination, wherein said mouse comprises an optical sensor for detecting finger movement, a plurality of control buttons provided adjacent said optical sensor, means for converting finger movement and operation of said control buttons into an output signal, and means for transmitting said output signal wirelessly to said receiver, and wherein said receiver is adapted to be provide an input signal to a computer.

In such an embodiment the mouse may comprise any of the features as defined above.

Preferably the receiver comprises a radio frequency (RF) receiving module. The receiver may comprise data recognition means for recognizing data transmitted by the mouse and for converting the data into a standard mouse outputting protocol recognizable by a computer.

Preferably the receiver may be a plug-and-play receiver that comprises a USB data converter and connects to a computer through a USB socket.

According to another aspect of the invention there is provided a wireless mouse and receiver combination, wherein said mouse comprises means for transmitting an output signal wirelessly to said receiver, wherein said receiver is adapted to be provide an input signal to a computer, and wherein said mouse is provided with a compartment for storing said receiver when not in use.

### BRIEF DESCRIPTION OF THE DRAWINGS

Some embodiments of the invention will now be described by way of example only and with reference to the accompanying drawings in which:

Figure 1 is a block diagram of one example of a mouse according to the invention;

Figure 2 is a block diagram of one example of an RF transmitter incorporated within a mouse according to an embodiment of the invention;

Figure 3 is a block diagram of one example of an RF receiver for use with a mouse according to an embodiment of the invention;

Figure 4 is the top view of one example of a mouse according to an embodiment of the invention showing the optical sensor;

Figure 5 is a rear view of one example of a mouse according to an embodiment of the invention;

Figure 6 is a side view of one example of a mouse according to an embodiment of the invention;

Figure 7 is another top view of one example of a mouse according to an embodiment of the invention showing the optical sensor; and

Figure 8 shows one example of a USB receiver according to an embodiment of the invention.

### DETAILED DESCRIPTION OF THE INVENTION

According to the present invention, at least in its preferred embodiments, there is provided a pointing device in the form of a mouse that does not require the use of a mouse pad or other flat surface. With the usual mouse pad removed, the cursor on the monitor can be subtly maneuvered by moving one's thumb or fingers over the optical sensor in the mouse. Practically all functions found in existing mice are implemented in embodiments of the invention via four buttons and a scroll wheel, including dragging, highlighting, scrolling, and selecting.

The shape of the mouse is also considered to be innovative. In addressing one of the common problems of all existing mice, the exterior contour of the mouse has been painstakingly shaped to fit the interior of a user's holding hand such that a comfortable grip for extended duration usage is assured, and the radio-frequency mouse is designed for PC users who are vulnerable to severe sore arm, aching waist, and backache from using a conventional mouse-on-desk for an extended period. In addition the buttons are strategically located for easy access by fingers. For both right-handed and left-handed users of different genders and ages, mice of various sizes and shapes may be provided.

The mouse communicates efficiently and effectively with a computer preferably through a Radio Frequency at, for example, 2.45 GHz wireless link via a USB adapter. With a typical range of say 10-meters, the mouse can be rested at ease, for example, on top of one's lap so that one's waist, arm, and back are relieved from the extra stress due to mouse usage. Optionally, using the page-up/page-down buttons and the built-in laser beam, this mouse can also be used as a pointer in multimedia presentations. Optionally, the mouse is rechargeable, and charged in a battery charging apparatus.

Multiple computer mice may be used with the same computer. A generalized multiple interactive mouse system is required that takes in any form of receiving mouse data and converts that data into one common recognized computer protocol through a wireless communication means. To avoid multiple data collision or mismatch after the manipulation of data through the common wireless communication path, therefore, a time-multiplexing allocation process is used in assigning the selected mouse in field and recognizing the communication protocols. The manipulating of data can be in the form of security conversion or in other form of data communication protocols such as wireless, radio and mobile.

Generally stated, the physical and psychological problems that arise in prolonged use of a mouse-on-desk can be rectified by the mouse of the present invention that is contoured to fit the interior of a user's holding hand so that optimal comfort is assured. With the mouse rested on one's lap or put anywhere for maximum relaxation, one's mind is also relaxed, and therefore one's creativity can be improved.

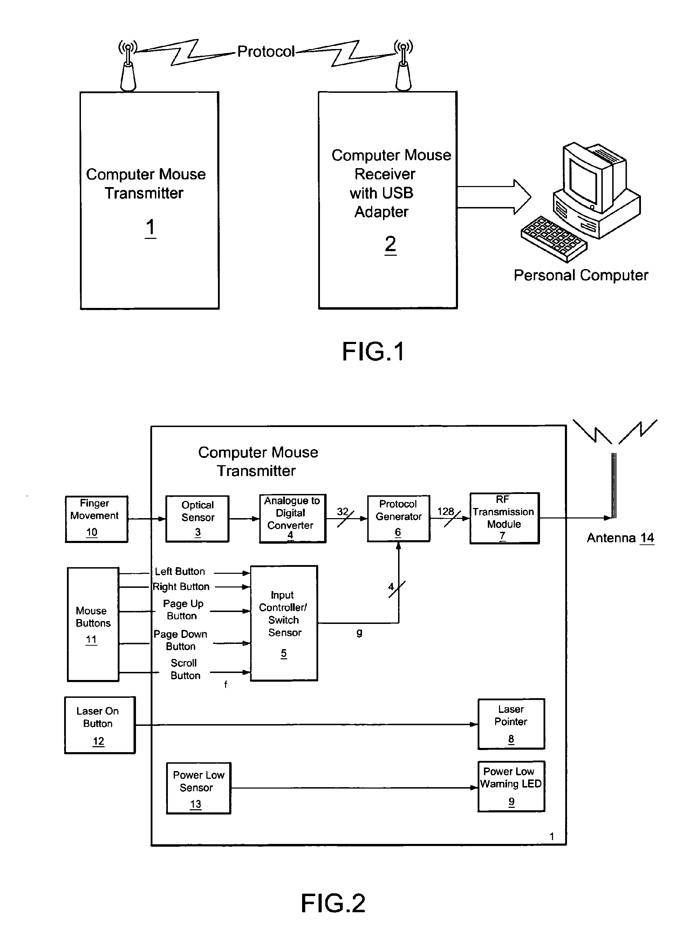

Referring to Figure 1, a preferred embodiment of the present invention comprises a Radio Frequency (RF) transmitter 1, a Radio Frequency receiver 2 with a USB interface that connects to a personal computer (PC). Both the transmitter and receiver are bi-directional communication devices.

Referring to Figure 2, the mouse according to an example of the invention includes an optical sensor 3 detecting finger movement, an analogue to digital converter 4 for finger movement conversion, an input controller 5 in the form of a switch sensor receiving input switch signals from a plurality of mouse buttons 11 including, for example, click or left buttons, scroll wheel and/or right button, page-up button and page-down button, a protocol generator 6 to concatenate the finger movement data from analogue to digital converter 4 and selected input signals from switch sensor 5 through a time division function multiplexing process or a time division bit overlaying process, and a RF (Radio Frequency) transmission module 7 that sends out the protocol generated from protocol generator 6 to field via antenna 14.

In the protocol generator 6, each protocol comprises transmitter identity data to be recognized by the receiver 2. The time division function multiplexing process operates on scalable mouse functions, whereas, the time division function bit overlaying process operates on a pair of functions whereby the selected function should be in the form of a set or sub-set of the other. The time division approaches allow that a limited size communication protocol may be used in each packet transmission.

By defining f is a function of an input signal Sᵢₙ of size n in switch sensor 5, i.e. f ∈ (1,n) and f = f₁f₂...fₙ; g is a function of an output signal Sₒᵤₜ of size m in switch sensor 5, i.e. g ∈ (1,m) and g = g₁g₂...gₘ and the size n > m.

For the time division function multiplexing process, at time t₁, g = *g*_{*t*₁} is mapped onto f_{1,m} and at time t₂, g = *g*_{*t*₂} is mapped onto f_{m+1,2m} and continues until at tₖ, g = *g_{tₖ}* is mapped onto f_{m(k-1)+1,n}.

For the time division function bit overlaying process, it operates time division approach on a pair of functions whereby the selected function should be in the form of a set or sub-set of the other; i.e. fᵢ∀fⱼ for any i and j and ∀ means 'belongs to'. Thus, fⱼ is a cascaded function of fᵢ and fⱼ = fᵢfᵢ...fᵢ. For example, a page-up function is equivalent to a scrolling function of moving p lines upward where p is the number of lines defined in one page or conversely the page-down function is equivalent to the scrolling function of moving p line downward. Thus, the time division function bit overlaying process can be assigned to the page-up and scroll function pair and/or the page-down and scroll function pair by repeating the scrolling function for p times.

One example of a way to implement the time division function multiplexing process (TDFM) for transmission is given by the pseudo-code as follows:

```
         Module TDFM_T(fg,n,m,Sin)
             {for i: = 1 to k do // where k = n div m
                 for j = 1 to m do
                    Sout,j = Sin, (i-1)×m+j
                    gj = f(i-1)×m+j
                 endfor
         if (Sout,j = Set)output g //Switch pressed or set
         endfor
         return TDFM_T
```

One example of a way to implement the time division bit overlaying function process (TDBOF) for transmission is given by the pseudo-code as follows:

```
         Module TDBOF_T(f,g,n,m,Sin)
             {for i: = 1 to k do // where k = n div m
                 for j = 1 to m do
                    Sout,j = Sin, (i-1)×m+j
                       for s_j = 1 to m do
                          if (fs_j ∀ fj) //search for overlaying elements
                          then for loop_j = 1 to p
                                  // Switch pressed or set
                                  if (Sout,j = Set)output gj = fs_j
                          else if (Sout,j = Set)output gj = f(i-1)×m+j
                       endfor
                    endfor
                 endfor
                 return TDBOF_T
```

Referring to Figure 2, for example, an input f of size 5 is converted to an output g of size 4, the analogue to digital converter will output two coordinates difference in 8 bits to store x position movement change and 8 bits to store the y position movement change. A total of 36 bits will be input to the protocol generator to form a 128 bits protocol. When the time division multiplexing process is used, each 36 bits protocol will represent each function switch being pressed and its coordinate changes. When the time division bit overlaying process is used, if the function switch is not an overlapping element, a 128 bits protocol will be sent out. Whereby, if the function is an overlaying element, a plurality of the same replacement functions will be sent out, i.e. a plurality of 128 bits protocol. Each 128 bits protocol contains the preamble data, command type, end-port value, mouse data (36 bits) and acknowledgement byte.

Referring further to Figure 2, the mouse may also include a laser pointer 8 enabled by a laser-on button 12 for activating laser pointer output and a low-power warning LED 9 activated by the low power sensor 13. The mouse may also have an energy saving sleeping mode triggered by no button activities for a prescribed period of time.

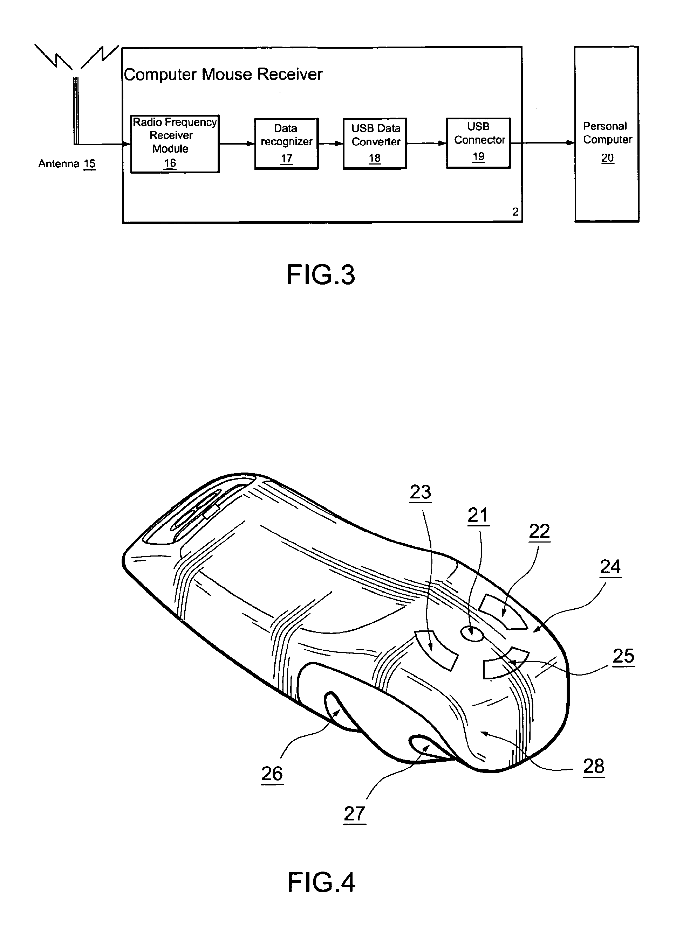

Referring to Figure 3, the receiver 2 comprises, for example, a Radio Frequency receiving module 16 that receives Radio Frequency protocols generated from at least one mouse, a data recognizer 17 that recognizes the protocols generated by the protocol generator 6 in the mouse, identifies the authorized transmitter(s) and reorganizes the data received from the authorized transmitter back into a standard mouse outputting protocol recognizable by a personal computer, and a USB data converter 18 that receives the output from data recognizer 17 and converts this data into a USB format to be received by a personal computer 20 via a USB connector 19. Using a USB format the receiver 2 can be a plug-and-play receiver. It will be understood though that in addition to USB format other serial interfaces may be used.

The data recognizer 17 will authenticate the transmitter(s); filter out unauthorized transmitter data to provide a preset uni-cast or multi-cast communication mode. For uni-cast, the receiver and transmitter are operated in point-to-point pairs, whereas in multi-cast, the receiver and transmitter are operated in single point-to-many points pairs. The receiver may select a signal from a number of computer mice based on arrival time priority or time division allocation.

Referring to Figures 4 to 7, the exterior shape of the mouse is contoured to fit the interior of a user's holding hand, to allow operation to be conducted with the mouse rested on one's lap or put anywhere for maximum relaxation and to provide an optimal comfort for prolong usage. This provides greater flexibility for the position of the mouse and helps mitigate some of the physical problems encountered with extended use of a conventional mouse.

Referring to Figure 4, the optical sensor 21 is provided by a high precision optical tracker ball; e.g., 800 dots per inch (dpi) sensing, allowing precise location of the finger or thumb to be determined instantaneously and to provide a smooth cursor movement response. As can also be seen from Figure 4, the mouse is also equipped with three buttons including page-up button 22, page-down button 23 and laser-on button 25 that are located for easy access by fingers and to provide mouse and pointer functions. The mouse is also equipped with an index finger click button 26 providing left button function and a scroll wheel 27 providing right button and scroll functions. The mouse is also equipped with a laser pointer 28 to provide optical remote pointing function, and a low power warning light in the form of LED 24.

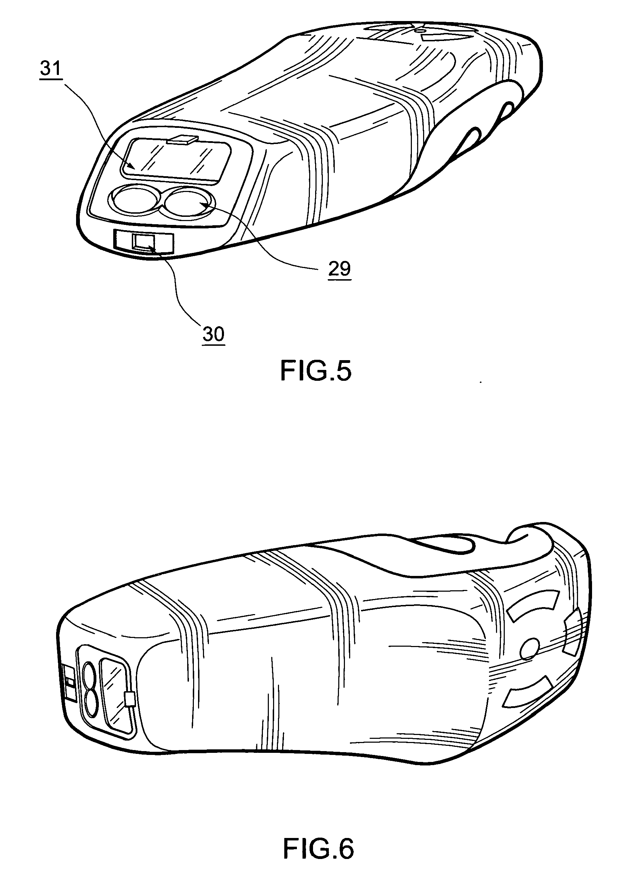

As can be seen from Figure 5, the mouse is preferably battery powered, provided with a battery compartment 29, taking for example two AAA batteries, which may be rechargeable, a battery charger inlet 30 to provide power for battery recharging and a compartment 31 to house the RF receiver when not in use.

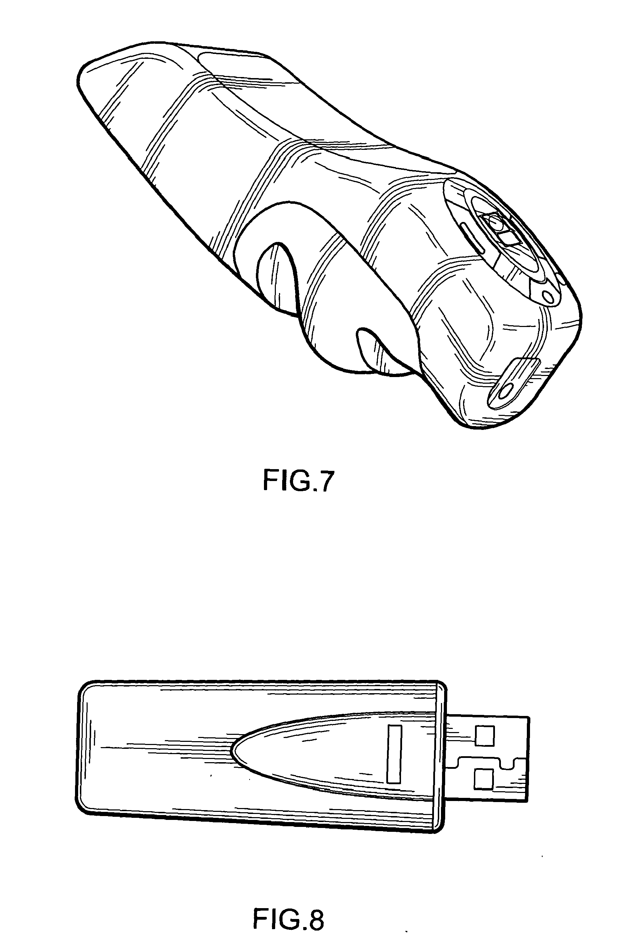

Referring to Figures 6 and 7, the exterior shape of the mouse is contoured to fit the interior of a user's holding hand.

Referring to Figure 8 there is shown an example of the receiver with a USB interfacing connector.

While several aspects of the present invention have been described and depicted herein, alternative aspects may be effected by those skilled in the art to accomplish the same objectives. Accordingly, it is intended by the appended claims to cover all such alternative aspects as fall within the true spirit and scope of the invention.

## Claims

1. A computer mouse comprising: an optical sensor for detecting finger movement, a plurality of control buttons provided adjacent said optical sensor, means for converting finger movement and operation of said control buttons into an output signal, and means for transmitting said output signal wirelessly to a computer.

2. A mouse according to Claim 1 wherein said converting means comprises an analogue to digital converter for finger movement conversion, an input controller receiving input switch signals from buttons, and a protocol generator concatenating the finger position data and said input switch signals.

3. A mouse according to Claim 2 wherein the analogue to digital converter converts finger movement into a logical computer recognized form to be received by the computer via a wireless link.

4. A mouse according to Claim 2 wherein the input controller organizes the input switch signals into groups to be packed by the protocol generator.

5. A mouse according to Claim 2 wherein the protocol generator forms the output signal from said finger position data and said input switch signals through a time division multiplexing function process or a time division bit overlaying process.

6. A mouse according to Claim 5 wherein the output signal is provided with identity data to be recognized by a receiver to authenticate the data and to provide pre-set uni-cast or multi-cast communication functions.

7. A mouse according to Claim 1 wherein said transmitting means comprises a radio frequency transmission module.

8. A mouse according to Claim 1 further comprising a laser pointer.

9. A mouse according to Claim 1 further comprising a low-power warning light.

10. A mouse according to Claim 1 wherein said mouse has an energy saving sleep mode.

11. A mouse according to Claim 9 wherein said sleep mode is activated when no buttons have been operated for a prescribed period of time.

12. A mouse according to Claim 1 wherein said mouse is provided with a compartment for storing a wireless receiver when not in use.

13. A wireless computer mouse and receiver combination, wherein said mouse comprises an optical sensor for detecting finger movement, a plurality of control buttons provided adjacent said optical sensor, means for converting finger movement and operation of said control buttons into an output signal, and means for transmitting said output signal wirelessly to said receiver, and wherein said receiver is adapted to be provide an input signal to a computer.

14. A combination according to Claim 13 wherein said converting means includes an analogue to digital converter for finger movement conversion, an input controller receiving input switch signals from buttons, and a protocol generator concatenating the finger position data and said input switch signals.

15. A combination according to Claim 13 wherein the analogue to digital converter converts finger movement into a logical computer recognized form for transmission to said receiver.

16. A combination according to Claim 13 wherein the input controller organizes the input switch signals into groups to be packed by the protocol generator.

17. A combination according to Claim 13 wherein the protocol generator forms the output signal from said finger position data and said input switch signals through a function bit overlaying process or a time division multiplexing process.

18. A combination according to Claim 17 wherein the output signal is provided with identity data to be recognized by a receiver to authenticate the data and to provide pre-set uni-cast or multi-cast communication functions.

19. A combination according to Claim 13 wherein said transmitting means comprises a radio frequency transmission module.

20. A combination according to Claim 13 wherein the receiver comprises a Radio Frequency (RF) receiving module.

21. A combination according to Claim 13 wherein said receiver comprises data recognition means for recognizing data transmitted by said mouse and for converting said data into a standard mouse outputting protocol recognizable by a computer.

22. A combination according to Claim 13 wherein said receiver comprises a USB data converter and wherein said receiver connects to a computer through a USB socket.

23. A combination according to Claim 13 wherein said mouse is provided with a compartment for storing said receiver when not in use.

24. A wireless computer mouse and receiver combination, wherein said mouse comprises means for transmitting an output signal wirelessly to said receiver, wherein said receiver is adapted to be provide an input signal to a computer, and wherein said mouse is provided with a compartment for storing said receiver when not in use.

25. A computer mouse, comprising: means for generating input switch signals, means for generating a cursor control signal, and a protocol generator for concatenating the input switch signals and the cursor control signal, wherein the protocol generator forms an output signal from said cursor control signal and said input switch signals through a time division multiplexing function process or a time division bit overlaying process.
